# EUROPÄISCHE PATENTSCHRIFT

(11) **EP 1 139 821 B1**
(45) Veröffentlichungstag und Bekanntmachung des Hinweises auf die Patenterteilung: **16.04.2003**
(21) Anmeldenummer: 98966564.1
(22) Anmeldetag: 22.12.1998
(51) Int. Cl.: A47C 27/08, B64B 1/40

(54) **Schlafmatratze**
Mattress
Matelas

(43) Veröffentlichungstag der Anmeldung: 10.10.2001
(73) Patentinhaber: Braun, Jürgen, 88400 Biberach (DE)
(72) Erfinder: Braun, Jürgen, 88400 Biberach (DE)
(86) Internationale Anmeldenummer: DE9803755
(87) Internationale Veröffentlichungsnummer: WO00036953

(56) Entgegenhaltungen:
- EP-A- 0 806 341
- CH-A- 623 469
- DE-A- 3 323 701
- US-A- 3 840 919
- US-A- 4 109 333
- US-A- 4 942 839
- US-A- 5 555 580
- US-A- 5 636 478

## Beschreibung

Die Erfindung betrifft eine Schlafmatratze mit einer flexiblen Hülle und mit miteinander kommunizierenden Druckkammern, die in dem Material der flexiblen Hülle integriert sind, wobei die Hülle neben einem ersten, formgebenden Druckkammersystem als zweites Druckkammersystem ausgebildet ist, das in prall befülltem Zustand des ersten Druckkammersystems eine geschlossene Formgebung aufweist, wobei bei einem Befüllen des ersten, formgebenden Druckkammersystems ein Fluidmedium ins Innere des zweiten Druckkammersystems einströmt, so dass sich das zweite Druckkammersystem passiv füllt, und die Formgebung der Hülle reversibel in Abhängigkeit von dem Grad der Befüllung der Druckkammern änderbar ist.

Schlafmatratzen der eingangs genannten Art sind im Stand der Technik in einer Mehrzahl unterschiedlicher Ausführungsformen bekannt (siehe z.B. die Druckschrift US-A-5 555 580). Insbesondere, wenn die betreffenden Druckkammern sehr großvolumig ausfallen, weisen die im Stand der Technik bekannten Schlafmatratzen jedoch sämtlich den Nachteil auf, daß ein Befüllungsvorgang der Druckkammern über Handpumpen oder Fußpumpen mühsam und zeitaufwendig ist, da die von einer Pumpe gelieferte Luftmenge dann nur einen kleinen Teil der gesamten Luftmasse ausmacht, die für eine Prall-Befüllung des betreffenden Druckkammersystems notwendig ist.

Aufgabe der Erfindung ist es, eine Schlafmatratze mit einem solchen Druckkammersystem zu schaffen, dass ein Befüllungsvorgang gegenüber den herkömmlichen Schlafmatratzen erleichtert ist.

Für eine Schlafmatratze der eingangs genannten Art wird diese Aufgabe dadurch gelöst, dass die Druckkammern des ersten, formgebenden Druckkammersystems als ausschließlich in die Hülle integrierte druckfeste, miteinander kommunizierende Schläuche ausgebildet sind und ein Gerüst bilden, das mit dem Grad der Befüllung der Schläuche an statischer Festigkeit gewinnt.

Bevorzugte Ausführungsformen der Erfindung sind Gegenstand der Unteransprüche.

Bei der erfindungsgemäßen Schlafmatratze wird durch das Merkmal, dass die Druckkammern des ersten, formgebenden Druckkammersystems als ausschließlich in die Hülle integrierte druckfeste, miteinander kommunizierende Schläuche ausgebildet sind und ein Gerüst bilden, das mit dem Grad der Befüllung der Schläuche an statischer Festigkeit gewinnt, erreicht, daß die Hülle, die als zweites Druckkammersystem ausgebildet ist, aus einem zusammengelegten oder zusammengefalteten Zustand sehr schnell in einen entfalteten Zustand überführbar ist, in der die Hülle eine vorherbestimmte, gewünschte Form einnimmt.

Die Formgebung der Hülle der erfindungsgemäßen Schlafmatratze ändert sich gemäß einer ersten bevorzugten Ausführungsform der Erfindung bei einem Befüllungsvorgang im wesentlichen in vorherbestimmter Weise, wobei die Formgebung der Hülle in prall befülltem Zustand der Druckkammern im wesentlichen auch vorherbestimmt ist.

Die Hülle der erfindungsgemäßen Schlafmatratze, ist gemäß einer anderen bevorzugten Ausführungsform der Erfindung in nicht befülltem Zustand der Druckkammern reversibel zusammenfaltbar.

Die Druckkammern der erfindungsgemäßen Schlafmatratze können für unterschiedliche Flüssigkeitsmedien ausgelegt sein. So können die Druckkammern zum einen ausgelegt sein, um mit einem Gas, insbesondere Luft befüllbar zu sein, und sie können andererseits ausgelegt sein, um mit einer Flüssigkeit, insbesondere Wasser, befüllbar zu sein.

Die erfindungsgemäße Schlafmatratze wird im folgenden anhand einer bevorzugten Äusführungsform erläutert, die in der Figur der Zeichnung dargestellt ist. Darin zeigt:

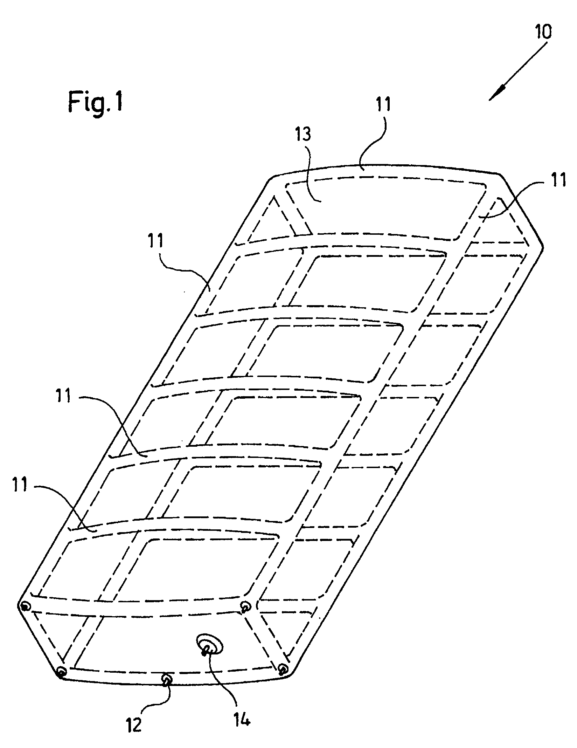

- Fig.1: eine bevorzugte Ausführungsform der erfindungsgemäßen Schlafmatratze, in einer Ansicht von schräg oben.

Figur 1 zeigt eine erfindungsgemäße Schlafmatratze 10, bei der die Wandung 13 eine großvolumige Druckkammer bildet. In sowohl die Seitenwände als auch die Ober- und Unterseite der Schlafmatratze 10 ist ein System kommunizierender Druckkammern 11 eingearbeitet, wobei die kommunizierenden Druckkammern 11 als druckfeste Schläuche ausgebildet sind, die über ein Ventil 12 mit Luft befüllbar sind, wobei bei einer Prall-Befüllung der Druckkammern 11 die Schlafmatratze 10 aus einem zusammengefalteten Zustand in eine Vorform eines Zustand übergeht, in der sie zum Tragen einer Person geeignet ist, und in dem sie im wesentlichen den Umfang und die äußeren Dimensionen aufweist, den sie in prall gefülltem Zustand innehat.

Die Druckkammern 11 bilden somit ein Gerüst, das mit dem Grad der Befüllung der Druckkammern 11 an statischer Festigkeit gewinnt, wobei bei dem Entfaltungsvorgang der Schlafmatratze 10 ambiente Luft von außen durch ein Ventil 14 in den sich ausdehnenden Innenraum der Schlafmatratze einströmt.

Nach Abschluß des natürlichen Einströmvorganges von Luft durch das Ventil 14 ins Innere der Schlafmatratze 10 ist die Schlafmatratze 10 mittels einer geeigneten Pumpeinrichtung über das Ventil 14 mit Luft prallbefüllbar. Die zum Prall-Befüllen des Inneren der Schlafmatratze 10 notwendige Luftmenge beschränkt sich dabei auf einen Bruchteil derjenigen Luftmenge, die notwendig wäre, die Schlafmatratze 10 insgesamt aus einem zusammengefalteten Zustand in einen entfalteten, mit Luft prall gefüllten Zustand zu überführen.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Schlafmatratze mit einer flexiblen Hülle (13) und mit miteinander kommunizierenden Druckkammern (11), die in dem Material der flexiblen Hülle (13) integriert sind, wobei die Hülle (13) neben einem ersten, formgebenden Druckkammersystem (11) als zweites Druckkammersystem ausgebildet ist, das in prall befülltem Zustand des ersten Druckkammersystems (11) eine geschlossene Formgebung aufweist, wobei bei einem Befüllen des ersten, formgebenden Druckkammersystems (11) ein Fluidmedium ins Innere des zweiten Druckkammersystems einströmt, so dass sich das zweite Druckkammersystem passiv füllt, und die Formgebung der Hülle (13) reversibel in Abhängigkeit von dem Grad der Befüllung der Druckkammern (11) änderbar ist, **dadurch gekennzeichnet, dass** die Druckkammern (11) des ersten, formgebenden Druckkammersystems als ausschließlich in die Hülle (13) integrierte druckfeste, miteinander kommunizierende Schläuche (11) ausgebildet sind und ein Gerüst bilden, das mit dem Grad der Befüllung der Schläuche (11) an statischer Festigkeit gewinnt.

2. Schlafmatratze nach Anspruch 1, **dadurch gekennzeichnet, dass** die Formgebung der Hülle (13) sich bei Befüllung im wesentlichen in vorherbestimmter Weise ändert.

3. Schlafmatratze nach einem der Ansprüche 1 oder 2, **dadurch gekennzeichnet, dass** die Hülle (13) in nicht befülltem Zustand der Druckkammern (11) zusammenfaltbar ist.

## Claims

1. Bed mattresses with a flexible sheath (13) and with intercommunicating pressure chambers (11) integrated in the material of the flexible sheath (13, whereby the sheath (13) as well as a first forming pressure chamber system (11) is formed as a second pressure chamber system which in fully inflated state of the first pressure chamber system (11) comprises a closed form, wherein for the filling of a first forming pressure chamber system (11), a fluid medium streams into the inside of the second pressure chamber system, such that the second pressure chamber system fills up passively, and the form of the sheath (13) can be reversed depending on the degree of dependence of filling the pressure chambers (11) identified in that the pressure chambers (11) of the first forming pressure chamber system are formed exclusively in the sheath (13) as integrated, pressure-resistant, intercommunicating hoses (11) and form a frame which gains in static stability with the degree of filling of the hoses (11).

2. Bed mattresses as set forth in claim 1, **characterized in that** the forming of the sheath (13) when filling, changes in such a way as has essentially been foreseen.

3. Bed mattresses as set forth in one of the claims 1 or 2, **characterized in that** the sheath (13) when the pressure chambers are not filled, can be folded together.

## Revendications

1. Le matelas pneumatique à revêtement flexible (13) et chambres de compression communicantes (11) qui sont intégrées dans le matériau du revêtement flexible (13), dont le revêtement (13) en plus d'un premier système de chambres de compression (11) lui donne sa forme et comprend un deuxième système de chambres de compression qui, lorsque le premier système de chambres de compression (11) est totalement rempli se présente sous forme compacte. Lors du remplissage total du premier système de chambre de compression (11) donnant sa forme au matelas pneumatique, un milieu fluide afflue à l'intérieur du deuxième système de chambres de compression, de telle sorte que le deuxième système de chambres de compression se remplit passivement. Et c'est ainsi que la forme du revêtement (13) devient réversible et peut se transformer selon le degré de remplissage des chambres de compression (11). Il est donc **caractérisé par le fait que** les chambres de compression (11) du premier système de chambres de compression, donnant sa forme au matelas, sont entièrement intégrées dans le revêtement (13) et constituent ainsi une base de soutien formée de boyaux (11) incorporés, résistant à la pression et communiquant les uns avec les autres et qui gagnent en fermeté statique selon le degré de remplissage des boyaux (11).

2. Le matelas pneumatique est défini de la manière suivante, selon la revendication 1, la forme prédéfinie du revêtement (13) change en grande partie lors du remplissage mais reste dans les normes de la forme prévue.

3. Le matelas pneumatique est défini de la manière suivante, selon la revendication 1 ou 2, le revêtement (13) peut être plié lorsque les chambres de compression sont vides.
